(19) Europäisches Patentamt
European Patent Office
Office européen des brevets

(11) Publication number: 0 520 287 A2

(12) EUROPEAN PATENT APPLICATION

(21) Application number: 92110098.8

(51) Int. Cl.5: C08G 77/46, C08G 77/50

(22) Date of filing: 16.06.92

(30) Priority: 27.06.91 JP 183253/91

(43) Date of publication of application: 30.12.92 Bulletin 92/53

(84) Designated Contracting States: DE FR GB

(71) Applicant: SHIN-ETSU CHEMICAL CO., LTD.
6-1, Ohtemachi 2-chome
Chiyoda-ku Tokyo(JP)

(72) Inventor: Takago, Toshio
94-7, Yanase
Annaka-shi, Gunma-ken(JP)
Inventor: Kishita, Hirofumi
3-19-1-402, Isobe
Annaka-shi, Gunma-ken(JP)
Inventor: Sato, Shin-ichi
3-5-5, Isobe
Annaka-shi, Gunma-ken(JP)
Inventor: Koike, Noriyuku
608-1-21, Yoshii, Yoshii-machi
Tano-gun, Gunma-ken(JP)
Inventor: Matsuda, Takashi
A-505, 791-4, Yanasa
Annaka-shi, Gunma-ken(JP)

(74) Representative: Dr. Fuchs, Dr. Luderschmidt
Dr. Mehler, Dipl.-Ing. Weiss Patentanwälte
Abraham-Lincoln-Strasse 7, Postfach 4660
W-6200 Wiesbaden(DE)

(54) **Fluorine-containing organosilicon compound.**

(57) A novel organosilicon compound is disclosed, which is a compound represented by the general formula

$$XO(SiRMe\text{-}CH_2CH_2RfCH_2CH_2SiRMe\text{-}O)_a[SiRMe\text{-}CH_2\ \text{-}CH_2(CF_2)_pCH_2CH_2SiRMe\text{-}O]_b(SiR^1Me\text{-}O)_cX,$$

in which Me is a methyl group, each R is, independently from the others, an unsubstituted or substituted monovalent hydrocarbon group free from aliphatic unsaturation, $R^1$ is an unsubstituted or substituted monovalent hydrocarbon group, X is a hydrogen atom or a triorganosilyl group, of which the organic groups bonded to the silicon atoms are each a monovalent hydrocarbon group having 1 to 8 carbon atoms, Rf is a divalent perfluoroalkylene or perfluoropolyether group having 11 to 30 carbon atoms represented by the general formula

$$(CF_2CF_2OCF_2)_s[CF(CF_3)OCF_2]_t(CF_2)_u\ \text{-}[CF_2OCF(CF_3)]_v(CF_2OCF_2CF_2)_w,$$

u being zero or a positive integer not exceeding 8, t and v each being zero or a positive integer not exceeding 5 and s and w each being zero or 1, a is a positive integer of 2 to 300, b is zero or a positive integer not exceeding 300, c is zero or a positive integer not exceeding 5000 and p is a positive integer of 2 to 8.

EP 0 520 287 A2

FIG. 5

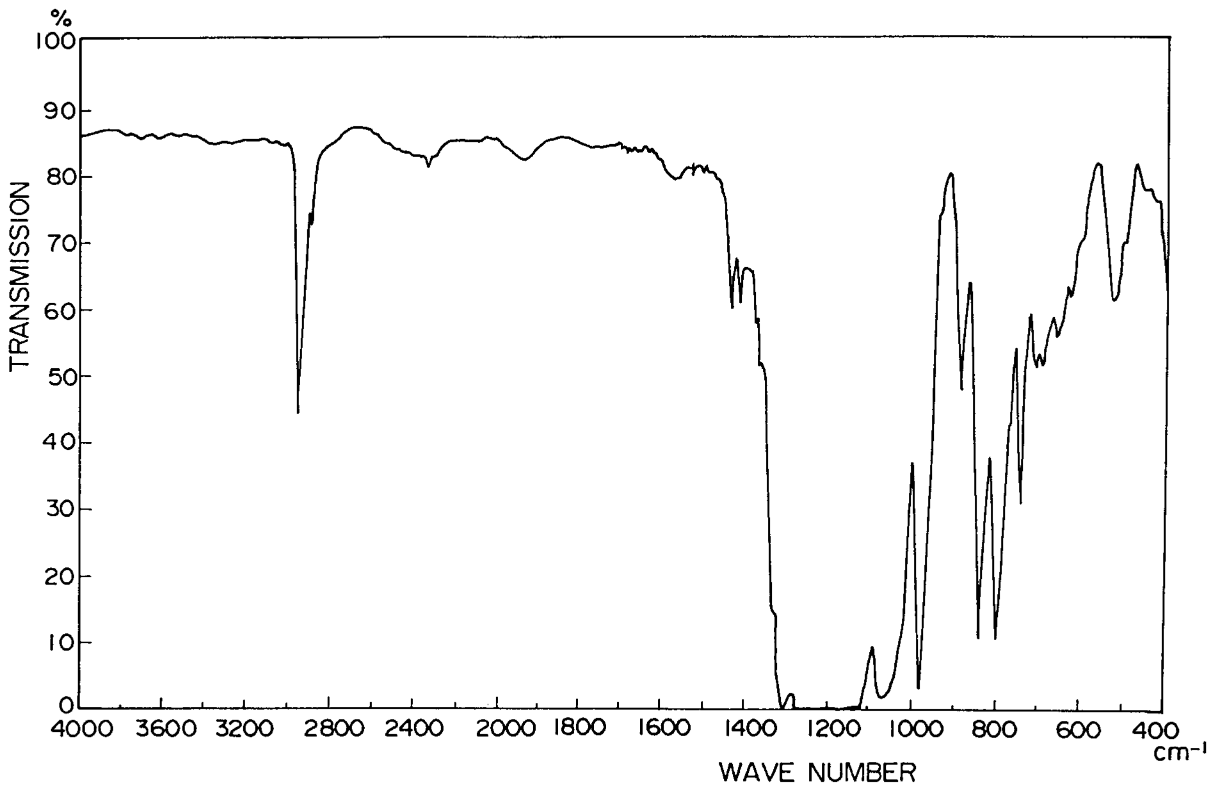
%
100
90
80
70
60
50
40
30
20
10
0
TRANSMISSION
4000 3600 3200 2800 2400 2000 1800 1600 1400 1200 1000 800 600 400
cm-1
WAVE NUMBER

## BACKGROUND OF THE INVENTION

The present invention relates to a novel organosilicon compound or, more particularly, to a novel organosilicon compound not described in any prior art literatures and having usefulness as a material of silicon-containing rubber shaving excellent resistance against chemicals and solvents as well as mold-release agents.

## SUMMARY OF THE INVENTION

The novel organosilicon compound of the invention is a compound represented by the general formula

$$XO(SiRMe\text{-}CH_2CH_2RfCH_2CH_2SiRMe\text{-}O)_a[SiRMe\text{-}CH_2\text{-}CH_2(CF_2)_pCH_2CH_2SiRMe\text{-}O]_b(SiR^1Me\text{-}O)_cX, \quad (I)$$

in which Me is a methyl group, each R is, independently from the others, an unsubstituted or substituted monovalent hydrocarbon group free from aliphatic unsaturation, $R^1$ is an unsubstituted or substituted monovalent hydrocarbon group, X is a hydrogen atom or a triorganosilyl group, of which the organic groups bonded to the silicon atoms are each a monovalent hydrocarbon group having 1 to 8 carbon atoms, Rf is a divalent perfluoroalkylene or perfluoropolyether group having 11 to 30 carbon atoms represented by the general formula

$$(CF_2CF_2OCF_2)_s[CF(CF_3)OCF_2]_t(CF_2)_u\text{-}[CF_2OCF(CF_3)]_v(CF_2OCF_2CF_2)_w, \quad (II)$$

u being zero or a positive integer not exceeding 8, t and v each being zero or a positive integer not exceeding 5 and s and w each being zero or 1,a is a positive integer of 2 to 300, b is zero or a positive integer not exceeding 300, c is zero or a positive integer not exceeding 5000 and p is a positive integer of 2 to 8.

## BRIEF DESCRIPTION OF THE DRAWING

Figures 1 to 5 are each an infrared absorption spectrum of the compounds prepared in Examples 1 to 5, respectively.

## DETAILED DESCRIPTION OF THE PREFERRED EMBODIMENTS

Following are the examples of the formulas each expressing the novel organosilicon compound of the invention in conformity with the above described definition of the compound although the scope of the invention is never limited thereto.

(1)

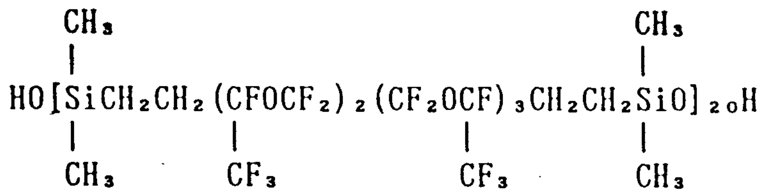

(2)

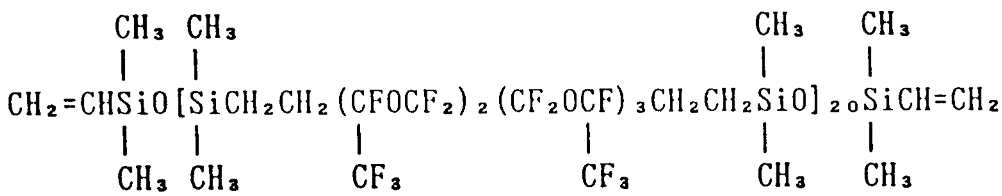

(3)

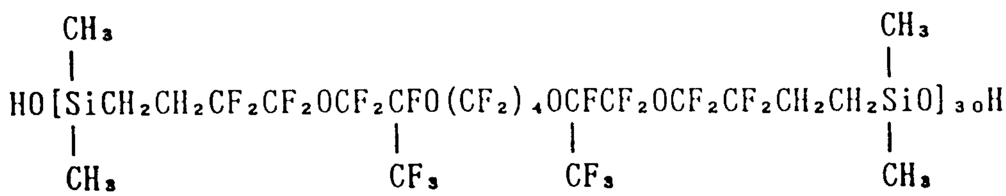

(4)

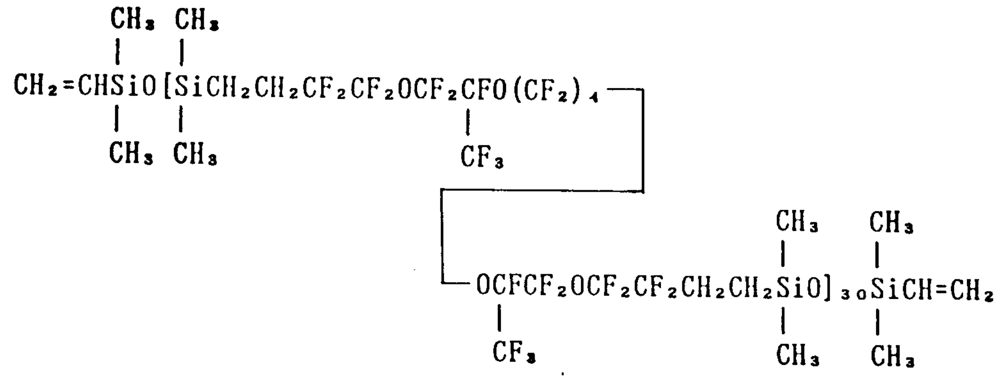

(5)

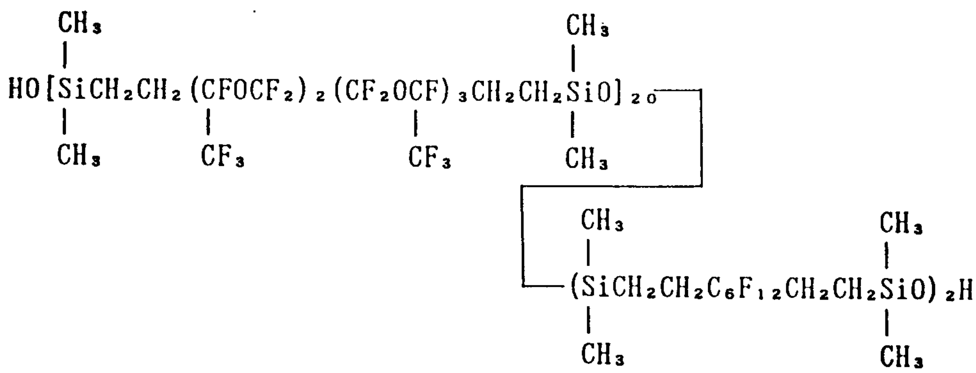

(6)

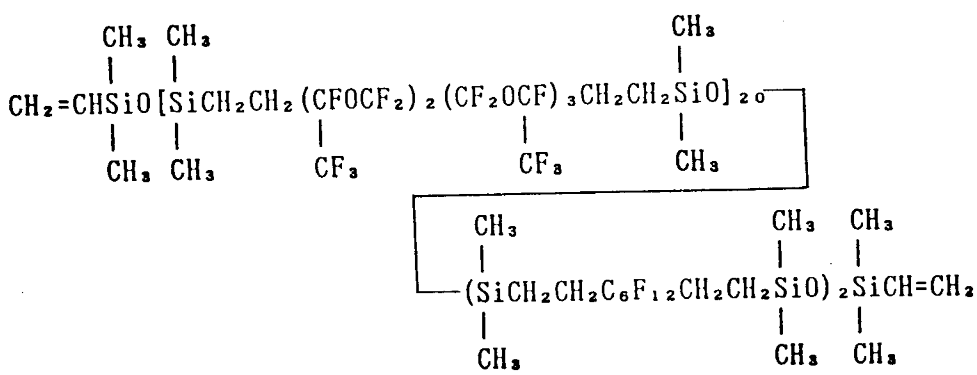

(7)

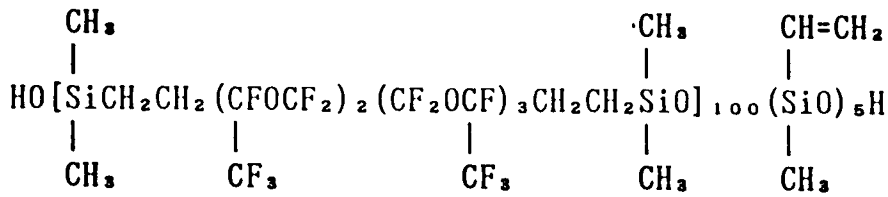

The above defined and exemplified novel organosilicon compound of the invention can be prepared, for example, by the method described below. Namely, a perfluoropolyether compound terminated at each molecular chain end with a silanol group-SiOH as expressed by the general formula

$HOSiMe_2CH_2CH_2(CF_2CF_2OCF_2)_s[CF(CF_3)-OCF_2]_t(CF_2)_u[CF_2OCF(CF_3)]_v(CF_2O-CF_2CF_2)_wCH_2CH_2SiMe_2OH$, (III)

in which Me is a methyl group and each of the subscripts has the same meaning as defined above, is subjected to the silanol-condensation reaction in the presence of a perfluorocarboxylic acid or tetramethylguanidine perfluoroacetate as a catalyst at a temperature in the range from 60 to 150 °C or, preferably, from 80 to 120 °C. The reaction product is a compound of the general formula (I) in which X is a hydrogen atom. The above mentioned starting compound can be synthesized from an $\alpha,\omega$-divinyl perfluoropolyether compound reported by O.R. Pierce and Y.K. Kim in Applied Polymer Symposium, volume 22, pages 103-125 (1973) by a known process.

When a compound of which X in the general formula (I) is a triorganosilyl group is desired, the compound can be prepared by subjecting the above obtained silanol-terminated compound to the silylation reaction with a silylating agent having the desired triorganosilyl group.

The above described novel organosilicon compound of the invention is useful in various applications. For example, the compound can be used as a material of a rubber composition having excellent resistance against chemicals and solvents and low moisture-permeability by virtue of the very high fluorine content. Since the compound is mostly a liquid at room temperature, it can be used as a material of an *in situ* curable liquid rubber composition conventionally used for forming a gasket by the so-called FIPG method. As a consequence of the very high fluorine content, the compound has a very low surface energy so that it can be used as an ingredient of a mold-release agent

In the following, examples are given to illustrate the preparation method and characterization of the inventive compound in more detail.

Example 1.

Into a four-necked flask of 300 ml capacity equipped with a stirrer, thermometer and reflux condenser were introduced 160 g of a fluorinated polyether compound terminated at each molecular chain end with a dimethylhydroxysilylethyl group and expressed by the formula

$HOSiMe_2CH_2CH_2[CF(CF_3)OCF_2]_2[CF_2OCF(CF_3)]_3-CH_2CH_2SiMe_2OH$,

and 0.25 g of a fluorinated carboxylic acid expressed by the formula

$C_3F_7OCF(CF_3)CF_2OCF(CF_3)COOH$

and the mixture was agitated for 3 hours at 120 °C. Formation of condensation water indicated proceeding of the dehydration condensation reaction along with a remarkable increase in the viscosity of the reaction mixture. After the end of the above mentioned reaction time, the condensation water was removed by distillation to give 151.6 g of a viscous liquid product having a refractive index of 1.339, specific gravity of 1.5450 and viscosity of 12,450 centipoise each at 25 °C. This product could be identified from the results of the NMR analysis, infrared absorption spectrophotometry and elementary analysis shown below to be a compound expressed by the average formula:

$HO\{SiMe_2CH_2CH_2[CF(CF_3)OCF_2]_2[CF_2OCF(CF_3)]_3-CH_2CH_2SiMe_2O\}_{20}H$.

$^1$H-NMR
δ 0.42 (s, Si-$CH_3$)
δ 0.92 (m, Si-$CH_2$)
δ 2.25 (m, CF-$CH_2$)
$^{19}$F-NMR

$$\underset{d}{CF}(\underset{a}{CF_3})O[\underset{b}{CF_2}\underset{e}{CF}(\underset{a}{CF_3})O]\underset{c}{CF_2}\underset{c}{CF_2}$$

a : -3.18 ppm
b : -5.89 ppm
c : -8.85 ppm
d : -51.71 ppm
e : -67.32 ppm

Infrared absorption spectrophotometry

See Figure 1 for the infrared absorption spectrum.

1100 - 1300 $cm^{-1}$ : C-F

| Elementary analysis | | | | | |
|---|---|---|---|---|---|
| | C | H | Si | F | O |
| Calculated, %, for $C_{23}H_{20}O_6Si_2F_{30}$ | 27.1 | 2.0 | 5.5 | 56.0 | 9.4 |
| Found, % | 27.0 | 1.8 | 5.6 | 55.8 | 9.5 |

Example 2.

Into a four-necked flask of 200 ml capacity equipped with a stirrer, thermometer and reflux condenser were introduced 160 g of a fluorinated polyether compound terminated a teach molecular chain end with a dimethylhydroxysilylethyl group and expressed by the formula

$HOSiMe_2CH_2CH_2CF_2CF_2OCF_2CF(CF_3)O(CF_2)_4O-CF(CF_3)CF_2OCF_2CF_2CH_2CH_2SiMe_2OH$

and 0.25 g of a fluorinated carboxylic acid expressed by the formula

$C_3F_7OCF(CF_3)CF_2OCF(CF_3)COOH$

and the mixture was agitated for 3 hours at 120 °C. Formation of condensation water indicated proceeding of the dehydration condensation reaction along with a remarkable increase in the viscosity of the reaction mixture. After the end of the above mentioned reaction time,the condensation water was removed by distillation to give 150.2 g of a viscous liquid product having a refractive index of 1.348, specific gravity of 1.5436 and viscosity of 16,500 centipoise each at 25 °C. This product could be identified from the results of the NMR analysis, infrared absorption spectrophotometry and elementary analysis shown below to be a compound expressed by the average formula:

$HO[SiMe_2CH_2CH_2CF_2CF_2OCF_2CF(CF_3)O(CF_2)_4O-CF(CF_3)CF_2OCF_2CF_2CH_2CH_2SiMe_2O]_{25}H$.

$^1$H-NMR
δ 0.41 (s, Si-$CH_3$)
δ 0.93 (m, Si-$CH_2$)
δ 2.24 (m, CF-$CH_2$)
$^{19}$F-NMR

$$CF_2OCF(CF_3)CF_2OCF_2CF_2$$
c e a b d d

a : -3.18 ppm
b : -5.89 ppm
c : -8.95 ppm
d : -9.25 ppm
e : -67.15 ppm

Infrared absorption spectrophotometry

See Figure 2 for the infrared absorption spectrum.

1100 - 1300 $cm^{-1}$ : C-F

| Elementary analysis | | | | | |
|---|---|---|---|---|---|
| | C | H | Si | F | O |
| Calculated, %, for $C_{22}H_{20}O_5Si_2F_{28}$ | 27.7 | 2.1 | 5.9 | 55.8 | 8.4 |
| Found, % | 27.6 | 2.1 | 5.7 | 55.6 | 8.6 |

Example 3.

Into a four-necked flask of 1000 ml capacity equipped with a stirrer, thermometer and reflux condenser were introduced 694 g of a fluorinated polyether compound terminated at each molecular chain end with a dimethylhydroxysilylethyl group and expressed by the formula

$HOSiMe_2CH_2CH_2[CF(CF_3)OCF_2]_2[CF_2O\text{-}CF(CF_3)]_3CH_2CH_2SiMe_2OH$,

34 g of another silanol-terminated compound expressed by the formula

$HOSiMe_2CH_2CH_2C_6F_{12}CH_2CH_2SiMe_2OH$

and 0.50 g of a fluorinated carboxylic acid expressed by the formula

$C_3F_7OCF(CF_3)CF_2OCF(CF_3)COOH$

and the mixture was agitated for 3 hours at 120 °C. Formation of condensation water indicated proceeding of the dehydration condensation reaction along with a remarkable increase in the viscosity of the reaction mixture. After the end of the above mentioned reaction time,the condensation water was removed by distillation to give 698 g of a viscous liquid product having a refractive index of 1.315, specific gravity of 1.533 and viscosity of 5500 centipoise each at 25 °C. This product could be identified from the results of the NMR analysis, infrared absorption spectrophotometry and elementary analysis shown below to be a compound expressed by the average formula:

$HO\{SiMe_2CH_2CH_2[CF(CF_3)OCF_2]_2[CF_2OCF(CF_3)]_3CH_2$ -
$CH_2SiMe_2O\}_{20}\{SiMe_2CH_2CH_2C_6F_{12}CH_2CH_2SiMe_2O\}_2H$.

$^1$H-NMR
δ 0.43 (s, $Si\text{-}CH_3$)
δ 0.93 (m, $Si\text{-}CH_2$)
δ 2.26 (m, $CF\text{-}CH_2$)
$^{19}$F-NMR

$$\underset{d}{CF}(\underset{a}{CF_3})O[\underset{b}{CF_2}\underset{e}{CF}(\underset{a}{CF_3})O]\underset{c}{CF_2}\underset{c}{CF_2}$$

a : -3.13 ppm
b : -5.85 ppm
c : -8.80 ppm
d : -51.70 ppm
e : -67.28 ppm

Infrared absorption spectrophotometry

See Figure 3 for the infrared absorption spectrum.

1100 - 1300 $cm^{-1}$ : C-F

| Elementary analysis | | | | | |
|---|---|---|---|---|---|
| | C | H | Si | F | O |
| Calculated, %, for $C_{488}H_{440}O_{122}Si_{44}F_{624}$ | 27.5 | 2.1 | 5.8 | 55.5 | 9.1 |
| Found, % | 27.4 | 2.0 | 5.9 | 55.4 | 9.0 |

Example 4.

Into a four-necked flask of 300 ml capacity equipped with a stirrer, thermometer and reflux condenser were introduced 200 g of the reaction product obtained in Example 1 and 4.71 g of a silyl ketene acetal of the formula

$CH_2 = CHSiMe_2$-O-C( = $CH_2$)$OCHMe_2$

and the mixture was agitated for 3 hours at 50 °C. After the end of the above mentioned reaction time, the isopropyl acetate as the condensation product was removed by distillation to give 193 g of a viscous liquid product having a refractive index of 1.3398, specific gravity of 1.545 and viscosity of 8450 centipoise each at 25 °C. This product could be identified from the results of the NMR analysis, infrared absorption spectrophotometry, elementary analysis and determination of the Si-CH = $CH_2$ groups shown below to be a compound expressed by the average formula:

$(CH_2 = CH)SiMe_2O\{SiMe_2CH_2CH_2[CF(CF_3)OCF_2]_2$ -$[CF_2OCF(CF_3)]_3CH_2CH_2SiMe_2O\}_{20}SiMe_2(CH = CH_2)$.

$^1$H-NMR
δ 0.45 (s, Si-$CH_3$)
δ 0.94 (m, Si-$CH_2$)
δ 2.28 (m, CF-$CH_2$)
$^{19}$F-NMR

$$\underset{d}{CF}(\underset{a}{CF_3})O[\underset{b}{CF_2}\underset{e}{CF}(\underset{a}{CF_3})O]\underset{c}{CF_2}\underset{c}{CF_2}$$

a : -3.18 ppm
b : -5.89 ppm
c : -8.85 ppm
d : -51.77 ppm
e : -67.39 ppm

Infrared absorption spectrophotometry

See Figure 4 for the infrared absorption spectrum.

1100 - 1300 $cm^{-1}$ : C-F

| Elementary analysis | | | | | |
|---|---|---|---|---|---|
| | C | H | Si | F | O |
| Calculated, %, for $C_{468}H_{418}O_{121}Si_{42}F_{600}$ | 27.3 | 2.0 | 5.7 | 55.4 | 9.5 |
| Found, % | 27.6 | 2.0 | 5.7 | 54.7 | 9.7 |

| Determination of Si-CH = $CH_2$ groups | |
|---|---|
| Found: | 0.018 mole/100 g |
| Calculated: | 0.0194 mole/100 g |

Example 5.

Into a four-necked flask of 200 ml capacity equipped with a stirrer, thermometer and reflux condenser were introduced 100 g of a fluorinated polyether compound terminated at each molecular chain end with a dimethylhydroxysilylethyl group and expressed by the formula

$HOSiMe_2CH_2CH_2[CF(CF_3)OCF_2]_2[CF_2O\ \text{-}CF(CF_3)]_3CH_2CH_2SiMe_2OH$,

0.45 g of 1,7-dihydroxy-1,3,5,7-tetramethyl-1,3,5,7-tetravinyl tetrasiloxane and 0.10 g of a fluorinated carboxylic acid expressed by the formula

$C_3F_7OCF(CF_3)CF_2OCF(CF_3)COOH$

and the mixture was agitated for 3 hours at 120 °C. Formation of condensation water indicated proceeding of the dehydration condensation reaction along with a remarkable increase in the viscosity of the reaction mixture. After the end of the above mentioned reaction time, the condensation water was removed by distillation to give 96.8 g of a gummy product having a refractive index of 1.343 and specific gravity of 1.5440, of which a 10% solution in m-xylene hexafluoride had a viscosity of 9.9 centistokes, each at 25 °C. This product could be identified from the results of the NMR analysis, infrared absorption spectrophotometry and elementary analysis shown below to be a compound expressed by the average formula:

$HO\{SiMe_2CH_2CH_2[CF(CF_3)OCF_2]_2[CF_2OCF(CF_3)]_3CH_2\ \text{-}CH_2SiMe_2O\}_{100}\{SiMe(CH=CH_2)O\}_5H$.

$^1$H-NMR
δ 0.42 (s, Si-$CH_3$)
δ 0.91 (m, Si-$CH_2$)
δ 2.30 (m, CF-$CH_2$)
$^{19}$F-NMR

$$CF(CF_3)O[CF_2CF(CF_3)O]CF_2CF_2$$

d a b e a c c

a : -3.12 ppm
b : -5.85 ppm
c : -8.79 ppm
d : -51.70 ppm
e : -67.30 ppm

Infrared absorption spectrophotometry
See Figure 5 for the infrared absorption spectrum.
1100 - 1300 $cm^{-1}$ : C-F

| Elementary analysis | | | | | |
|---|---|---|---|---|---|
| | C | H | Si | F | O |
| Calculated, %, for $C_{2315}H_{2032}O_{606}Si_{205}F_{3000}$ | 27.3 | 2.0 | 5.7 | 55.4 | 9.5 |
| Found, % | 27.6 | 2.1 | 5.6 | 55.5 | 9.3 |

## Claims

1. An organosilicon compound represented by the general formula

$XO(SiRMe\text{-}CH_2CH_2RfCH_2CH_2SiRMe\text{-}O)_a[SiRMe\text{-}CH_2\text{-}CH_2(CF_2)_pCH_2CH_2SiRMe\text{-}O]_b(SiR^1Me\text{-}O)_cX$,

in which Me is a methyl group, each R is, independently from the others, an unsubstituted or substituted monovalent hydrocarbon group free from aliphatic unsaturation, $R^1$ is an unsubstituted or substituted monovalent hydrocarbon group, X is a hydrogen atom or a triorganosilyl group, of which the organic groups bonded to the silicon atoms are each a monovalent hydrocarbon group having 1 to 8 carbon atoms, Rf is a divalent perfluoroalkylene or perfluoropolyether group having 11 to 30 carbon atoms represented by the general formula

$(CF_2CF_2OCF_2)_s[CF(CF_3)OCF_2]_t(CF_2)_u\text{-}[CF_2OCF(CF_3)]_v(CF_2OCF_2CF_2)_w$,

u being zero or a positive integer not exceeding 8, t and v each being zero or a positive integer not exceeding 5 and s and w each being zero or 1, a is a positive integer of 2 to 300, b is zero or a positive integer not exceeding 300, c is zero or a positive integer not exceeding 5000 and p is a positive integer of 2 to 8.

FIG. I

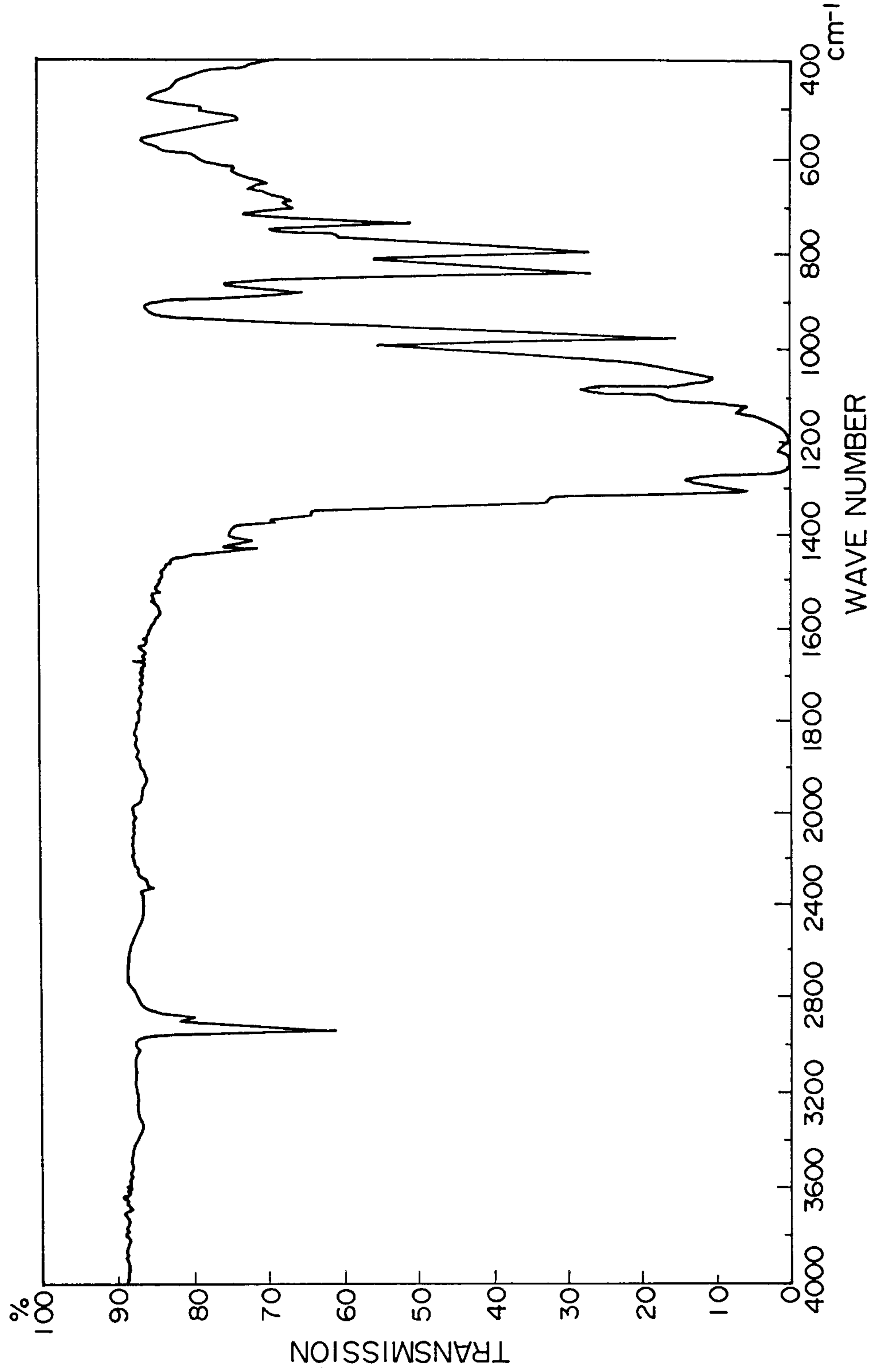
%
TRANSMISSION
100
90
80
70
60
50
40
30
20
10
0
4000
3600
3200
2800
2400
2000
1800
1600
1400
1200
1000
800
600
400
cm-1
WAVE NUMBER

FIG. 2

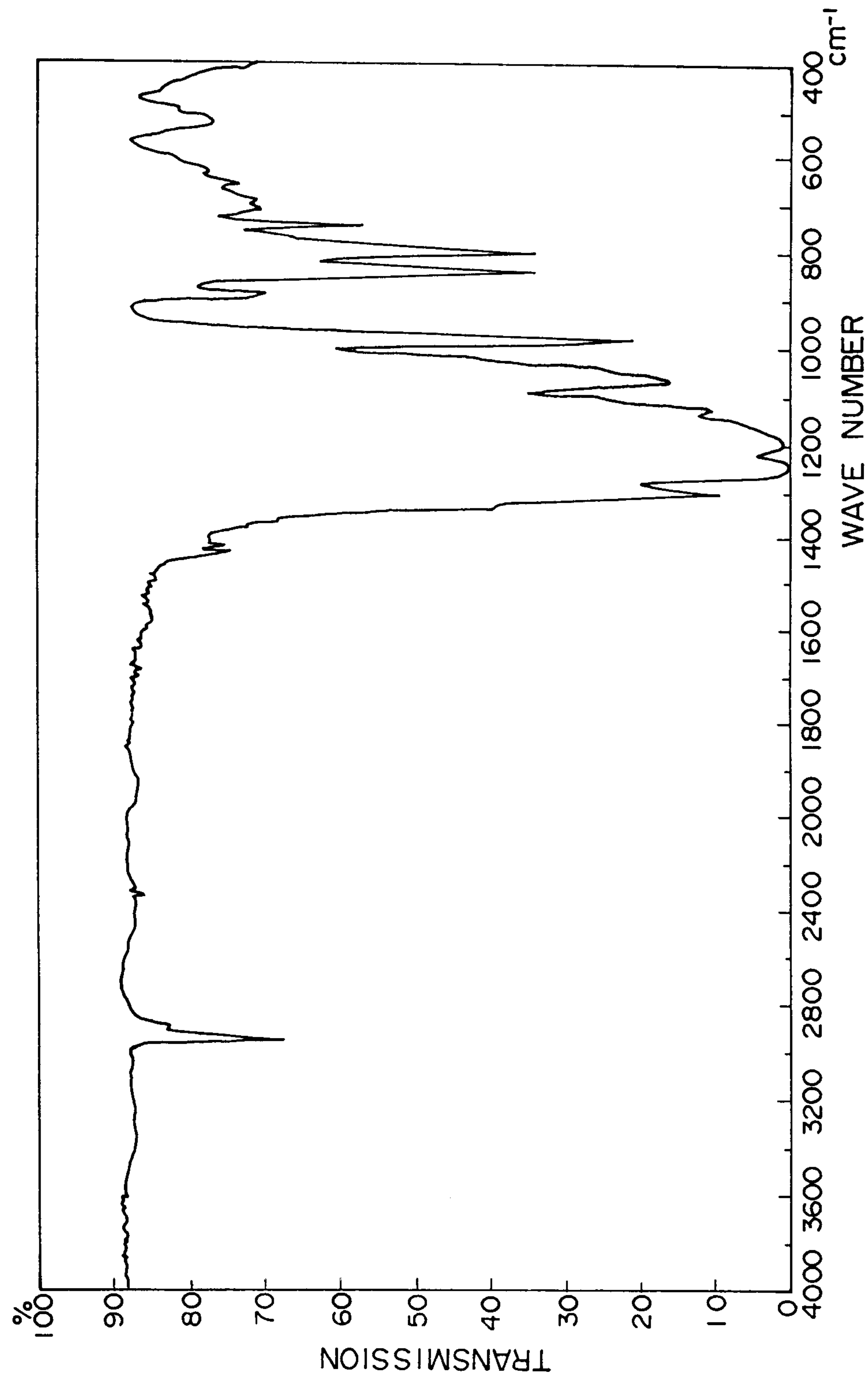
%
TRANSMISSION
WAVE NUMBER
cm-1
100
90
80
70
60
50
40
30
20
10
0
4000
3600
3200
2800
2400
2000
1800
1600
1400
1200
1000
800
600
400

FIG. 3

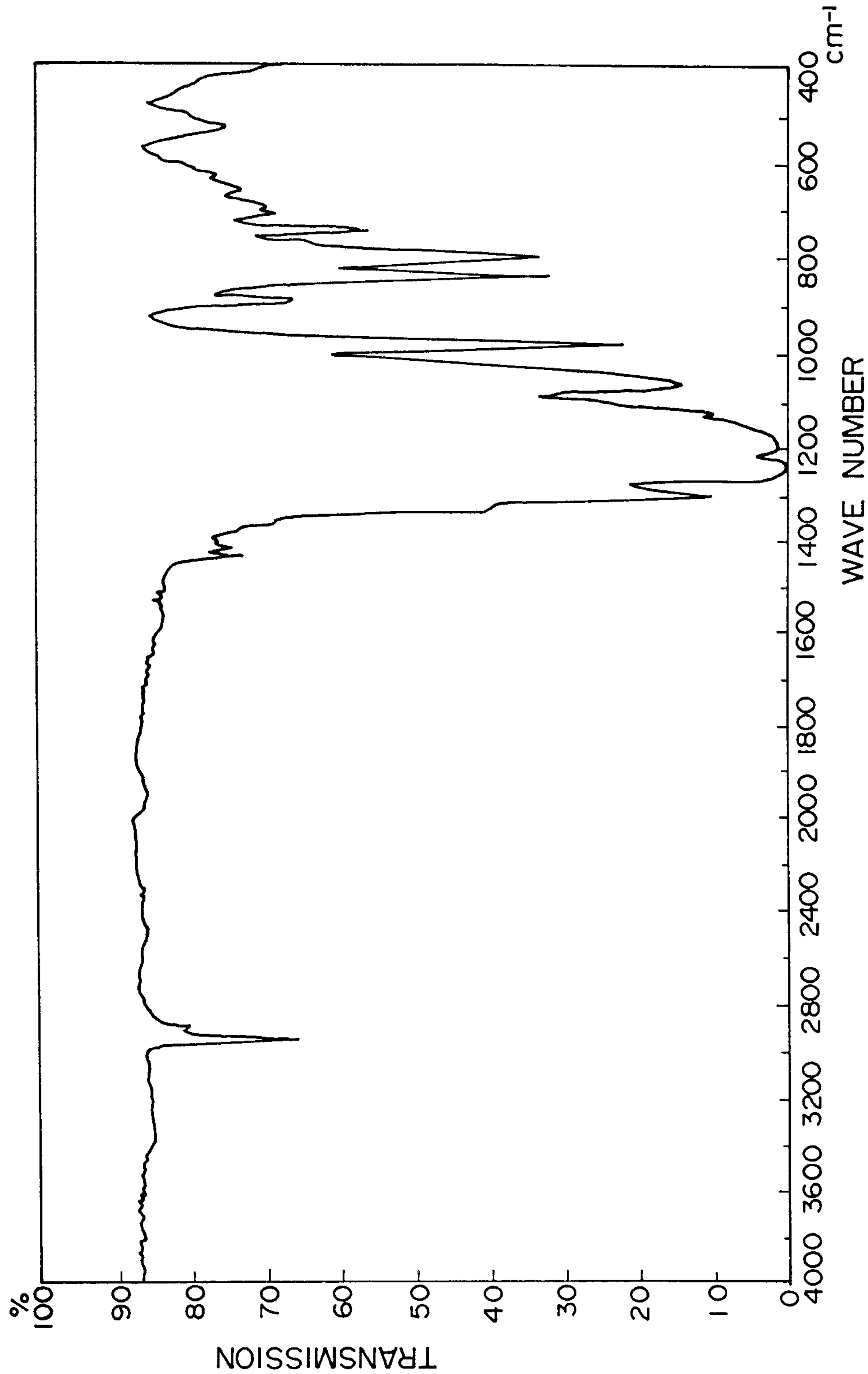
%
TRANSMISSION
100
90
80
70
60
50
40
30
20
10
0
4000
3600
3200
2800
2400
2000
1800
1600
1400
1200
1000
800
600
400
cm-1
WAVE NUMBER

FIG. 4

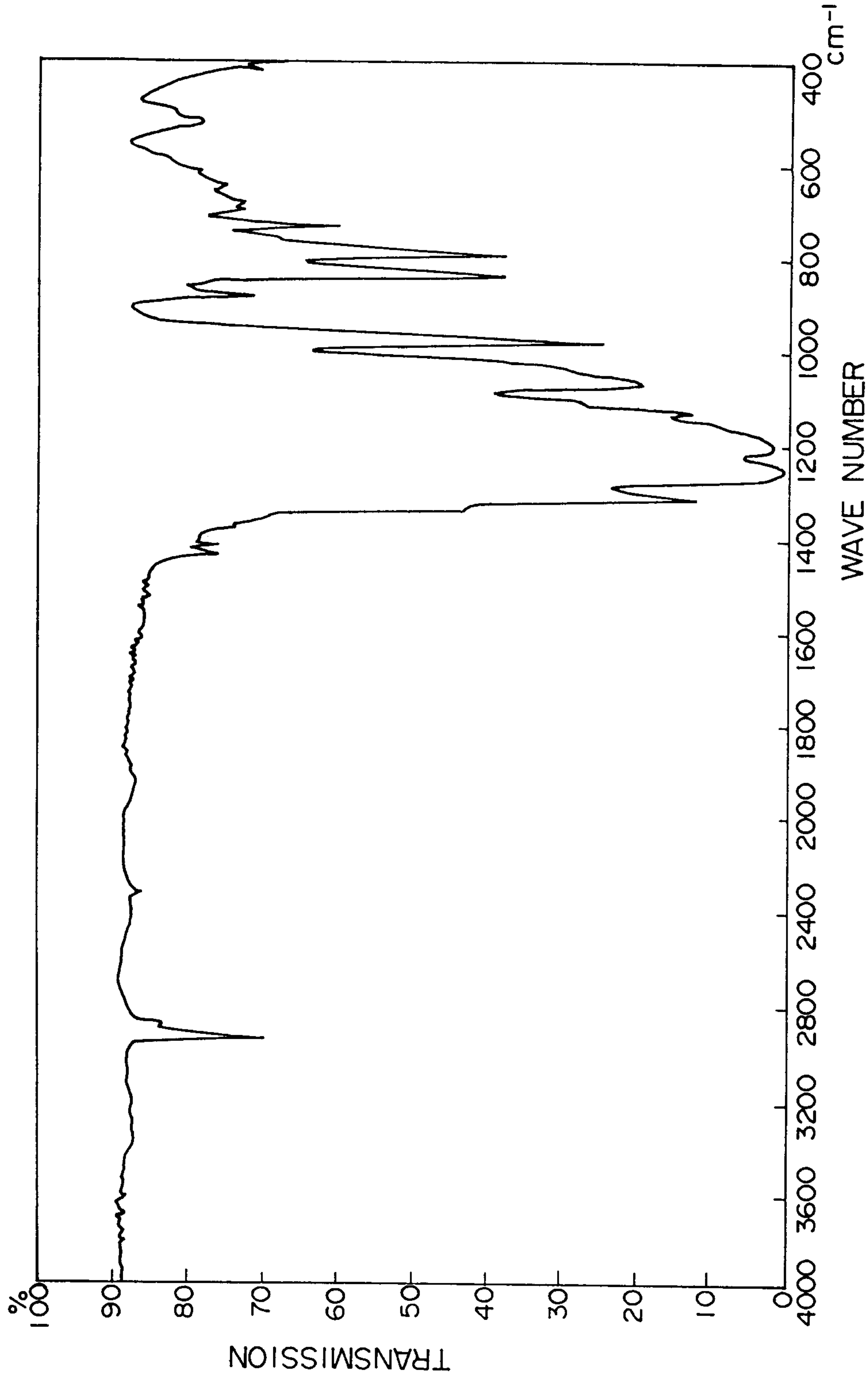
%
TRANSMISSION
100
90
80
70
60
50
40
30
20
10
0
4000
3600
3200
2800
2400
2000
1800
1600
1400
1200
1000
800
600
400
cm-1
WAVE NUMBER

FIG. 5

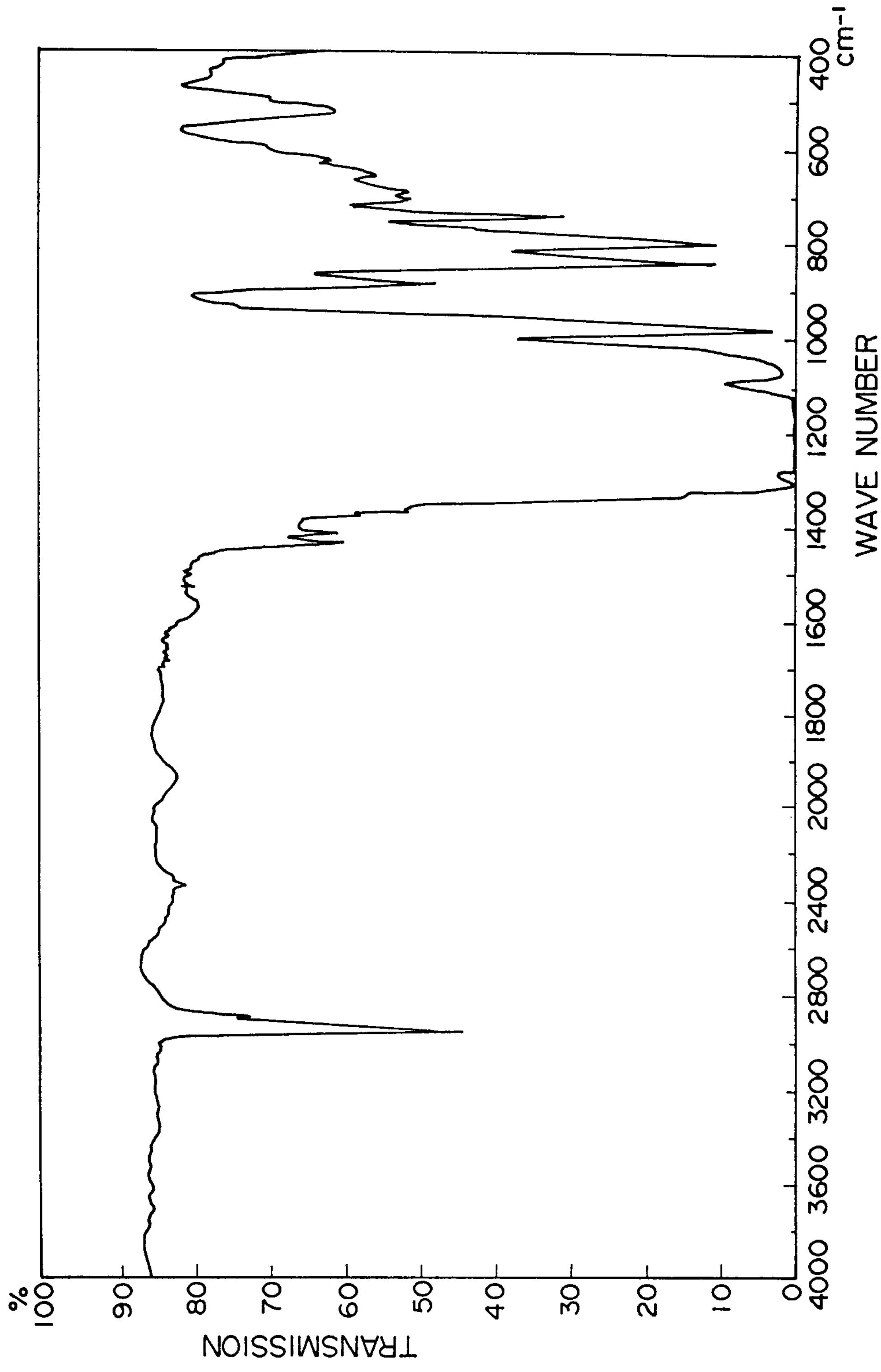
%
100
90
80
70
60
50
40
30
20
10
0
TRANSMISSION
4000
3600
3200
2800
2400
2000
1800
1600
1400
1200
1000
800
600
400
cm-1
WAVE NUMBER